# EUROPÄISCHE PATENTANMELDUNG

(11) **EP 3 309 539 A2**
(43) Veröffentlichungstag der Anmeldung: **18.04.2018**
(21) Anmeldenummer: 17192205.7
(22) Anmeldetag: 20.09.2017
(51) Int. Cl.: G01N 21/90, G01L 1/24, G01M 11/08, G01N 21/21

(54) **MESSANORDNUNG UND VERFAHREN ZUM MESSEN VON MECHANISCHEN SPANNUNGEN**

(30) Priorität: 23.09.2016 DE 102016218390
(71) Anmelder: Fraunhofer-Gesellschaft zur Förderung der angewandten Forschung e.V., 80686 München (DE)
(72) Erfinder: ERNST, Jürgen, 91052 Erlangen (DE); ANDREI, Tunea, 91054 Erlangen (DE)
(74) Vertreter: Burger, Markus

(57) **Zusammenfassung**

Eine Messanordnung umfasst eine erste Kamera und eine zweite Kamera sowie einen ersten Polarisationsfilter und einen zweiten Polarisationsfilter, wobei die Messanordnung ausgelegt ist, eine Polarisationsinformation zu bestimmen.

## Beschreibung

### Technisches Gebiet

Ausführungsbeispiele gemäß der vorliegenden Erfindung betreffen eine Messanordnung zum Messen von mechanischen Spannungen, ein Verfahren zum Messen von mechanischen Spannungen sowie ein Computerprogramm zum Messen von mechanischen Spannungen.

### Hintergrund der Erfindung

Bisher existieren verschiedene Konzepte, um mechanische Spannungen in Objekten zu erfassen. Beispielsweise ist die Messung von mechanischen Spannungen in transparenten Werkstoffen (Glas, Kunststoff) mittels polarisiertem Licht eine bekannte Messmethode (Prinzip nach Senarmont). Die Messung mittels polarisiertem Licht beruht auf dem physikalischen Effekt der Spannungsdoppelbrechung, die eine Veränderung der Polarisation von polarisiertem Licht, das durch das Objekt hindurchgelaufen ist, bewirkt. Diese Veränderung wird gemessen und in mechanische Spannungswerte umgerechnet.

Die Messung der mechanischen Spannungen wird insbesondere bei Glasprodukten angewendet, um zu prüfen, ob die sogenannten Restspannungen (=mechanischen Spannungen), die nach dem Herstellungsprozess im Glas vorliegen, innerhalb bestimmter Grenzen liegen. Meist soll das Produkt praktisch keine Restspannungen aufweisen. Es gibt aber auch Fälle, wo ein bestimmtes Maß an Restspannungen vorhanden sein muss, um beispielsweise besonders widerstandfähig zu sein (vorgespanntes Glas).

Bei der Flachglasproduktion ist die Kenntnis der im endlosen Glasband vorhandenen Spannungen vorteilhaft für die Optimierung des Schnittes in einzelne Platten. Auch die Qualität des Schnittes bzw. Bruches selbst ist von den Spannungen abhängig. Des Weiteren kann durch eine optimierte Regelung des Abkühlofens die Qualität der Produkte verbessert werden.

Bisherige Lösungen nutzen beispielsweise gekreuzte Polarisationsfilter, wobei vor einer möglichst homogenen diffusen Lichtquelle ein Polarisationsfilter, Polarisator genannt, angeordnet ist. Die Lichtquelle wird von einer Kamera aufgenommen. Unmittelbar vor der Kamera ist ein zweiter Polarisationsfilter angeordnet, der als Analysator bezeichnet wird. Der Analysator ist gegenüber dem Polarisator um 90 Grad verdreht, so dass die Kamera kein Licht von der Lichtquelle aufnimmt, das Bild ist dunkel. Bringt man nun ein Testobjekt zwischen Polarisator und Analysator, so wird beim Vorliegen von mechanischen Spannungen die Polarisationsebene des Lichts gedreht, und der Analysator lässt nun einen Teil des Lichts durch. Sofern die Spannungen im Glas eine örtliche Verteilung aufweisen, so wird diese Verteilung im Kamerabild in Form unterschiedlicher Intensität (Helligkeit) aufgenommen. Die Intensität ist von der Höhe der Spannung im Testobjekt abhängig. Man erhält also eine bildhafte Darstellung der Spannungsverteilung im Testobjekt. Es wurde erkannt, dass bei der beschriebenen Messmethode mittels gekreuzten Polarisationsfilter zeitliche Schwankungen der Helligkeit der Lichtquelle (Schmutz, Alterung) zu Messfehlern führen. Des Weiteren wurde erkannt, dass bei der beschriebenen Methode Inhomogenität der Lichtquelle (Schmutz) zu Messfehlern führt. Weiterhin wurde erkannt, dass Veränderungen der Intensität durch Absorption im Messobjekt zu Messfehlern führen. Hinzukommend wurde erkannt, dass Veränderung der Intensität durch gewölbte Oberflächen des Messobjekts zu Fehlern (Linsenwirkung, Bündelung, Zerstreuung) führt.

In DE 351 28 51 wird eine Punktmessung mit rotierendem Polarisationsfilter beschrieben. Hierbei wird das Glas von linear oder zirkular polarisiertem Licht durchstrahlt und durch Spannungen im Glas wird die Polarisation verändert. Zur Analyse der Polarisation wird ein rotierender linearer Polarisationsfilter (Analysator) verwendet, der sich vor einem Lichtdetektor dreht. Die Intensitätsveränderungen auf dem Detektor werden analysiert und liefern einen Messwert für die Polarisation, aus der die Spannungen berechnet werden. Es wurde erkannt, dass die beschriebene Lösung nachteilhaft ist, da sie mechanische Bewegung innerhalb der Messanordnung involviert, wodurch aufgrund von Verschleiß ein erhöhter Wartungsaufwand entsteht. Weiterhin wurde erkannt, dass die beschriebene Lösung eine aufwendige Konstruktion aufweist. Im Übrigen wurde erkannt, dass eine sequentielle Messung der einzelnen Polarisationsrichtungen Nachteile hat. Es wurde erkannt, dass die sequentielle Messung bei bewegten Objekten, die jeweils an einer anderen Stelle gemessen werden, zu systembedingten Fehlern führt.

Die DE 195 11 707 und die DE 199 53 528 beschreiben eine Punktmessung mit optischer Trennung der Polarisationskomponenten. Hierbei wird das Glas (oder ein anderes transparentes Material) von zirkular polarisiertem Licht durchstrahlt. Im Empfänger werden entweder mittels zweier spezieller Spiegel (Brewsterplatten) oder mittels Strahlteilern und nachfolgenden Polarisationsfiltern die beiden senkrechten Polarisationskomponenten getrennt und auf zwei Fotoempfänger geleitet. Es wurde erkannt, dass die beschriebenen Lösungen nachteilhaft sind, da eine aufwendige Konstruktion notwendig ist und nur eine Punktmessung möglich ist, d.h. keine Bildgebung.

Die US 2012075513 beschreibt eine Polarisationskamera, wobei vor einer möglichst homogenen diffusen Lichtquelle ein Polarisationsfilter, Polarisator genannt, angeordnet ist. Die Lichtquelle wird von einer speziellen Polarisationskamera aufgenommen. Diese Kamera ist in der Lage, die Polarisation des Lichts zu messen. Es wird kein Analysator benötigt. Das Testobjekt wird zwischen Lichtquelle und Kamera angeordnet. Die Polarisationskamera misst die Parameter der Polarisation, z.B. die Stokes-Parameter, aus denen die Verzögerung zwischen den senkrechten Wellenfronten und daraus letztlich die mechanischen Spannungen im Glas berechnet werden. Es wurde erkannt, dass die beschriebene Lösung nachteilhaft ist, da zu ihrer Realisierung eine sehr teure Spezialkamera erforderlich ist.

Die CN 103499405 A beschreibt eine Vorrichtung und eine Methode zur Restspannungsdetektion von transparenten Plastikprodukten. Diese Lösung beschreibt ein komplexes optisches System, welches in Kombination mit einer Kamera genutzt wird.

Die DE 102013010469 A1 beschreibt eine Strahlteilvorrichtung aus Prismenkeilen für den Einsatz in Kamerasystemen. Die beschriebene Lösung beschreibt die Notwendigkeit von Prismen, und ist nicht ausgelegt, um mechanische Spannungen zu detektieren.

Die DE 103 108 37 A1 beschreibt ein Verfahren und eine Vorrichtung zur automatischen Messung der Spannungsdoppelbrechung an transparenten Körpern. Es wurde erkannt, dass die beschriebene Lösung nachteilhaft ist, da mittels nur einer Kamera nur eine sequentielle Aufnahme verschiedener Polarisationsrichtungen möglich ist.

Die DE 195 11 707 A1 beschreibt ein Verfahren zur Bestimmung von Spannungen in transparenten Materialien. Es wurde erkannt, dass die beschriebene Lösung nachteilhaft ist, da zur Realisierung ein komplexes optisches System notwendig ist.

Die US 2012075513 A beschreibt ein Mikrogitterbildgebungspolarimeter mit Frequenzbereichsrekonstruktion. Der beschriebene Aufbau ist nachteilhaft, da eine aufwendige Spezialkamera erforderlich ist.

Es besteht daher ein Bedarf nach einem Konzept zur Messung von mechanischen Spannungen, dass einen verbesserten Kompromiss zwischen Kosten und Leistungsfähigkeit bringt.

### Zusammenfassung

Ein Ausführungsbeispiel gemäß der Erfindung schafft eine Messanordnung zum Messen von mechanischen Spannungen in einem Objekt. Hierbei weist die Messanordnung eine erste Kamera auf, die ausgelegt ist, um unter Verwendung eines ersten Polarisationsfilters ein Abbild eines ersten Objektbereichs (Bildfeld) des Objekts aus einer ersten Perspektive (d.h. Lagerelation zwischen Kamera und von der Kamera erfasstem Objektbereich), mit einem ersten Strahlengang zwischen dem Objekt und einem der ersten Kamera zugeordneten ersten optisch wirksamen Element, z.B. Linse, zu erzeugen. Des Weiteren weist die Messanordnung eine zweite Kamera auf, die ausgelegt ist, um unter Verwendung eines zweiten Polarisationsfilters, dessen Polarisationsrichtung sich von einer Polarisationsrichtung des ersten Polarisationsfilters unterscheidet, ein Abbild eines zweiten Objektbereichs des Objekts aus einer zweiten Perspektive, mit einem zweiten Strahlengang zwischen dem Objekt und einem der zweiten Kamera zugeordneten ersten optisch wirksamen Element, zu erzeugen. Weiterhin überlappen sich Bildfelder der ersten Kamera und der zweiten Kamera zumindest teilweise, so dass sich der von der ersten Kamera erfasste erste Objektbereich und der von der zweiten Kamera erfasste zweite Objektbereich zumindest teilweise überlappen. Im Übrigen ist die Messanordnung ausgelegt, um basierend auf einer von der ersten Kamera gelieferten Bildinformation und einer von der zweiten Kamera gelieferten Bildinformation eine Polarisationsinformation zu erhalten.

Die beschriebene Messanordnung ermöglicht ein effizientes und einfaches Messen von mechanischen Spannungen mittels Bildgebung, wobei die für die Bildgebung benötigen Kameras beispielsweise kostengünstige handelsübliche Kameras aus dem Endverbraucherbereich sein können. Des Weiteren ist die Messanordnung kostengünstig zu realisieren, da keine komplexen optischen Systeme notwendig sind, die die Strahlengänge beeinflussen bevor diese von den Kameras aufgefangen werden. Weiterhin unterscheiden sich die Strahlengänge der jeweiligen Kameras, entsprechend ihrer Perspektiven. Hierbei können die Perspektiven beispielsweise unterschiedliche Blickwinkel auf ein Objekt beschreiben. Durch die Ausnutzung der unterschiedlichen Perspektiven kann beispielsweiser ein teurer Strahlteiler eingespart werden, der bei herkömmlichen Konzepten eingesetzt wird, um einen gemeinsamen Strahlengang zu realisieren.

Des Weiteren basiert dieses Ausführungsbeispiel gemäß der Erfindung auf der Erkenntnis, dass unpolarisiertes Licht, das durch ein Objekt läuft, entsprechend mechanischer Spannungen in dem Objekt eine Änderung der Polarisation erfährt. Des Weiteren kann die Messanordnung mittels des ersten Polarisationsfilters Licht einer ersten Polarisationsrichtung des ersten Polarisationsfilters auf die erste Kamera leiten. Weiterhin kann die Messanordnung Licht einer zweiten Polarisationsrichtung des zweiten Polarisationsfilters, die sich von der ersten Polarisationsrichtung unterscheidet, auf die zweite Kamera leiten. Durch die unterschiedlichen Polarisationsrichtungen kann die Messanordnung zu einem Zeitpunkt mittels zweier Bildinformationen eine Polarisationsinformation erhalten zur Bestimmung mechanischer Spannungen. Dadurch, dass sich die Bildbereiche der ersten und der zweiten Kamera zumindest teilweise überlappen und sich der von der ersten Kamera erfasste erste Objektbereich und der von der zweiten Kamera erfasste zweite Objektbereich zumindest teilweise überlappen, können beispielsweise Intensitätsunterschiede zwischen gemeinsam erfassten Bereichen erfasst werden. Die Intensitätsunterschiede sind begründet durch die unterschiedliche Durchlässigkeit der Polarisationsfilter. Eine Polarisationsinformation kann somit basierend auf Bildinformationen von einer ersten Kamera und Bildinformationen von einer zweiten Kamera erzeugt werden, wobei die Bildinformationen beispielsweise gleichzeitig erzeugt worden sind.

Bei einem weiteren bevorzugten Ausführungsbeispiel ist die erste Kamera ausgelegt, um das Abbild des ersten Objektbereichs des Objekts direkt aufzunehmen und die zweite Kamera ausgelegt, um das Abbild des zweiten Objektbereichs des Objekts direkt aufzunehmen. Bei den direkten Aufnahmen befinden sich beispielsweise keine weiteren optischen Mittel, abgesehen von den Polarisationsfiltern, in den Strahlengängen der individuellen Kameras. Die beschriebene Messanordnung ist vorteilhaft, da beispielsweise auf ein teures optisches System im Strahlengang verzichtet werden kann.

Bei einem bevorzugten Ausführungsbeispiel ist die Messanordnung derart ausgelegt, dass von einem vorgegebenen Punkt des Objekts, der in dem ersten Objektbereich und in dem zweiten Objektbereich liegt, ein erster Strahlengang zu der ersten Kamera ausgeht und dass von dem vorgegebenen Punkt des Objekts ein zweiter Strahlengang zu der zweiten Kamera ausgeht, wobei der erste Strahlengang und der zweite Strahlengang sich zumindest in einem Bereich der Umgebung des Objekts unterscheiden, zum Beispiel nicht parallel sind. Das beschrieben Ausführungsbeispiel kann beispielweise vorteilhaft mittels einer Spiegelanordnung realisiert werden, so dass Strahlengänge die sich am Objekt noch unterscheiden mittels der Spiegel beispielsweise parallel gerichtet werden. Somit könnte ein gleicher Strahlengang in einem Verlauf der Strahlengänge erzielt werden in größerer Entfernung von dem Objekt.

Gemäß einem bevorzugten Ausführungsbeispiel weist die erste Kamera ein der ersten Kamera zugeordnetes Objektiv auf, wobei ein direkter geradliniger Strahlengang zwischen dem der ersten Kamera zugeordneten Objektiv und dem ersten Objektbereich besteht. Des Weiteren weist die zweite Kamera ein der zweiten Kamera zugeordnetes Objektiv auf, wobei ein direkter geradliniger Strahlengang zwischen dem der zweiten Kamera zugeordneten Objektiv und dem zweiten Objektbereich besteht, (beispielsweise aber nicht notwendigerweise) unterscheidet sich das der ersten Kamera zugeordnete Objektiv von dem der zweiten Kamera zugeordneten Objektiv. Durch die unterschiedlichen den Kameras zugeordneten Objektiven können beispielsweise verschieden Vergrößerungen des Bildbereichs realisiert werden. Eine Vergrößerung des Bildbereichs kann dazu dienen um vorteilhaft verschiedene Abstände zwischen den individuellen Kameras und dem Objekt zu realisieren.

Bei einem bevorzugten Ausführungsbeispiel sind die erste Kamera und die zweite Kamera so angeordnet, um die Abbilder des ersten Objektbereichs und des zweiten Objektbereichs über vollständig getrennte Strahlengänge aufzunehmen. Das beschriebene Ausführungsbeispiel ist vorteilhaft, da dadurch beispielsweise ein teurer Strahlenleiter eingespart werden kann, der beispielsweise zur Führung eines gemeinsamen Strahlengangs notwendig ist. Durch die getrennten Strahlengänge und das Einsparen eines Strahlenleiters kann eine günstigere Gesamt-Messanordnung realisiert werden.

Bei einem weiteren bevorzugten Ausführungsbeispiel sind die erste Kamera und die zweite Kamera so angeordnet, um die Abbilder des ersten Objektbereichs und des zweiten Objektbereichs ohne Verwendung eines gemeinsamen optischen Systems aufzunehmen. Das beschriebene Ausführungsbeispiel ist vorteilhaft, da ein gemeinsames optisches System, beispielsweise basierend auf Strahlleitern, die Gesamtkosten der Messanordnung erhöht. Weiterhin kann durch das beschrieben Ausführungsbeispiel eine weniger aufwändige Messanordnung realisiert werden. Hinzukommend kann durch die Einsparung eines gemeinsamen optischen Systems beispielsweise eine leichtere oder kleiner Messanordnung realisiert werden.

Bei einem bevorzugten Ausführungsbeispiel ist die Messanordnung ausgelegt, um eine Polarisationsinformation basierend auf Helligkeitsverhältnissen der sich überlappenden Abbilder des ersten Objektbereichs und des zweiten Objektbereichs der Bildfelder der ersten Kamera und der zweiten Kamera zu erzeugen. Die Bestimmung der Polarisationsinformation basierend auf Helligkeitsverhältnissen ist besonders vorteilhaft, da Helligkeitsverhältnisse sehr leicht aus optischen Abbildungen abgeleitet werden können. Weiterhin kann die Polarisationsinformation basierend auf Helligkeitsverhältnissen eine schnelle Aussage über mechanische Spannungen in einem Objekt ermöglichen.

Bei einem weiteren bevorzugten Ausführungsbeispiel weist die Messanordnung einen Objektträger auf, der ausgelegt ist, um das Objekt so zu positionieren, dass zumindest eine (zu prüfende) Oberfläche des Objekts in einem Bereich, im dem sich die Bildfelder der ersten Kamera und der zweiten Kamera überlappen, angeordnet ist. Des Weiteren weist die Messanordnung eine Kamerahaltevorrichtung auf, die ausgelegt ist, um die Kameras zu tragen. Das beschriebene Ausführungsbeispiel ist vorteilhaft, da durch den Objektträger erreicht werden kann, dass sich die von der ersten Kamer und von der zweiten Kamer erfasste Objektbereich überlappen. Des Weiteren kann die Kamerahaltevorrichtung vorteilhaft dazu dienen, um beispielsweise Kameras an gewünschten Positionen zu halten, wodurch beispielsweise die zwei Perspektiven geeignet eingestellt werden können.

Bei einem bevorzugten Ausführungsbeispiel ist die Messanordnung ausgelegt, um basierend auf der Polarisationsinformation eine zweidimensionale oder dreidimensionale Verteilung von mechanischen Spannungen in dem Objekt zu ermitteln. Dies kann nützlich sein, um beispielsweise die Information über die mechanischen Spannungen mit einer zweidimensionalen Bildinformation oder einer dreidimensionalen Volumeninformation zu verknüpfen womit beispielswese mechanische Spannungen in dem Objekt besonders einfach lokalisiert werden können.

Bei einem weiteren bevorzugten Ausführungsbeispiel ist die Messanordnung ausgelegt, um eine Information über die zweidimensionale Verteilung von mechanischen Spannungen mit einem Abbild eines Objektbereichs zu verknüpfen. Weiterhin ist die Messanordnung ausgelegt, um das Abbild des Objektbereichs basierend auf der von der ersten Kamera gelieferten Bildinformation und auf der von der zweiten Kamera gelieferten Bildinformation zu erzeugen. Diese Verknüpfung kann vorteilhaft dazu dienen, um mechanische Spannungen in einem Objekt zu lokalisieren, da sich die gelieferte Bildinformation im direkten Zusammenhang mit dem abgebildeten Objektbereich befindet.

Bei einem bevorzugten Ausführungsbeispiel sind die erste Kamera und die zweite Kamera derart angeordnet, so dass Normalenebenen, die senkrecht zu der optischen Achse der ersten Kamera und der zweiten Kamera sind, sich in einem Winkel, der beispielsweise zwischen 0,1° und 30° liegt, der bei manchen Ausführungsbeispielen kleiner als 5 Grad ist, schneiden. Das beschriebene Ausführungsbeispiel ist vorteilhaft, da Abbilder des Objektbereichs aufgrund des vergleichsweise geringen Winkels bereits eine große Ähnlichkeit aufweisen, d.h. beispielsweise keine großen geometrischen Verzerrungen zueinander aufweisen. Dies kann vorteilhaft sein, da beispielsweise keine komplexe Nachverarbeitung mehr notwendig ist, um die Abbilder aneinander anzugleichen, und da damit beispielsweise direkt aus den Abbildern eine Polarisationsinformation erhalten werden kann.

Bei einem bevorzugten Ausführungsbeispiel ist die Messanordnung ausgelegt, um überlappende Abbilder des ersten Objektbereichs der ersten Kamera und des zweiten Objektbereichs der zweiten Kamera unter Verwendung einer Bildverarbeitung zumindest teilweise geometrisch aneinander anzugleichen, beispielsweise indem geometrische Verzerrungen entfernt werden, wobei geometrische Verzerrungen beispielsweise trapezförmig sein können. Des Weiteren ist die Messanordnung ausgelegt, um die Polarisationsinformation von den aneinander angeglichenen Abbildungen abzuleiten, z.B. durch Vergleich der Helligkeit. Das beschriebene Ausführungsbeispiel kann vorteilhaft sein, wenn die erste Perspektive, aus der das erste Abbild entstanden ist, und die zweite Perspektive, aus der das zweite Abbild entstanden ist, stark beziehungsweise zu stark voneinander abweichen. Durch die unterschiedlichen Perspektiven können mehr oder weniger starke geometrische Verzerrungen entstehen, die vorteilhafterweise mittels Bildverarbeitung angeglichen werden können, damit jeweils Bildinformationen der beiden Kameras, die zu gleichen Objektpunkten gehören, miteinander verglichen werden können. Zur Bestimmung mechanischer Spannung kann beispielsweise aus den angeglichenen Abbildern mit einfachen Mitteln eine Polarisationsinformation erhalten werden.

Bei einem bevorzugten Ausführungsbeispiel sind die erste Kamera und die zweite Kamera derart angeordnet, dass Ebenen, in denen Bildsensoren der ersten Kamera und der zweiten Kamera parallel sind oder einen Winkel von höchstens 2 Grad einschließen. Des Weiteren weist zumindest die erste Kamera eine im Hinblick auf einen Bildsensor versetzte Linse (beispielsweise eine zu der Mittelnormale des Bildsensors versetzte Linse) auf, wobei eine optische Achse der Linse oder eines Objektivs, gegenüber einer Mitte einer Bildfläche des Bildsensors seitlich versetzt ist, wobei ein Winkel zwischen der Bildfläche und der optischen Achse zwischen 88° und 90° liegt, wobei die erste Kamera ausgelegt ist, um einen ersten Objektbereich zu erfassen, so dass sich eine Überlappung von zumindest 80%, oder zumindest 90%, oder zumindest 95%, mit dem zweiten Objektbereich ergibt. Das beschriebene Ausführungsbeispiel kann beispielsweise vorteilhaft die erhaltenen Bildinformationen ohne komplexe Nachverarbeitung direkt zur Bestimmung der Polarisationsinformation nutzen, da durch die genannte Anordnung beispielweise Trapezverzerrungen weitgehend oder vollständig vermieden werden beziehungsweise die Verzerrungen bei beiden Kameras gleichartig sind. Alternativ oder zusätzlich kann natürlich die zweite Kamera eine wie beschrieben versetzte Linse aufweisen.

Bei einem bevorzugten Ausführungsbeispiel ist die Messanordnung ausgelegt, um das Abbild eines ersten Objektbereichs unter Verwendung der ersten Kamera und das Abbild eines zweiten Objektbereichs unter Verwendung der zweiten Kamera, gleichzeitig oder zumindest in kurzem zeitlichen Abstand (beispielsweise innerhalb 1ms oder innerhalb von 5ms oder innerhalb von 25ms) zu erzeugen. Das beschriebene Ausführungsbeispiel ist vorteilhaft, um beispielsweise bewegte Objekte bezüglich ihrer mechanischen Spannungen zu untersuchen. Dies basiert darauf, dass durch zwei Kameras gleichzeitig zwei verschiedene Polarisationsrichtungen beobachtet werden können und somit beispielsweise eine präzise Information über die mechanischen Spannungen in dem Objekt zum Aufnahmezeitpunkt erzeugt werden kann.

Bei einem bevorzugten Ausführungsbeispiel ist die Messanordnung ausgelegt, um eine Messung von mechanischen Spannungen an einem sich bewegenden Objekt durchzuführen. Durch die gleichzeitige Aufnahme von zwei Abbildungen mittels jeweiliger Polarisationsfilter mit unterschiedlichen Polarisationsrichtungen kann beispielsweise der Einfluss einer Bewegung des Objekts ignoriert werden, da beispielsweise eine komplette Polarisationsinformation durch die beiden Abbildungen erhalten werden kann. Durch die komplette Polarisationsinformation kann beispielsweise eine präzise Aussage über die mechanischen Spannungen in dem Objekt ermöglicht wird.

Bei einem bevorzugten Ausführungsbeispiel ist die Messanordnung ausgelegt, um eine räumliche oder zeitliche Veränderung einer Helligkeit, beispielsweise eine Helligkeit einer Beleuchtung eines Objekts, durch Ausnutzung von zwei Abbildern des überlappenden Objektbereichs zu kompensieren. Das beschriebene Ausführungsbeispiel ist vorteilhaft, um eine gleichmäßige Qualität der Ergebnisse über den gesamten Objektbereich zu ermöglichen.

Ein Ausführungsbeispiel gemäß der Erfindung schafft ein Verfahren zum Messen von mechanischen Spannungen in einem Objekt. Ein erster Schritt des Verfahrens umfasst das Erzeugen eines Abbilds eines ersten Objektbereichs aus einer ersten Perspektive mit einer ersten Kamera unter Verwendung eines ersten Polarisationsfilters. Ein zweiter Schritt umfasst das Erzeugen eines Abbilds eines zweiten Objektbereichs aus einer zweiten Perspektive mit einer zweiten Kamera unter Verwendung eines zweiten Polarisationsfilters, dessen Polarisationsrichtung sich von einer Polarisationsrichtung des ersten Polarisationsfilters unterscheidet. Bei dem ersten Schritt und dem zweiten Schritt überlappen sich zumindest teilweise Bildfelder der ersten Kamera und der zweiten Kamera, so dass sich der von der ersten Kamera erfasste erste Objektbereich und der von der zweiten Kamera erfasste zweite Objektbereich zumindest teilweise überlappen. Ein dritter Schritt umfasst ein Erhalten einer Polarisationsinformation, basierend auf einer von der ersten Kamera gelieferten Bildinformation und einer von der zweiten Kamera gelieferten Bildinformation. Das beschriebene Ausführungsbeispiel ist vorteilhaft, da mit der erhaltenen Polarisationsinformation Aussagen über mechanische Spannungen in dem Objekt gemacht werden können. Weiterhin können mit dem beschriebenen Verfahren effizient Polarisationsinformationen eines Objekts mittels zweier Kameras erhalten werden.

Ein Ausführungsbeispiel gemäß der Erfindung schafft ein Verfahren zum Extrahieren einer mechanischen Spannungsinformation. Ein erster Schritt des Verfahrens umfasst ein Erhalten eines Abbilds eines ersten Objektbereichs aus einer ersten Perspektive, das mit einem ersten Polarisationsfilter aufgenommen ist. Ein zweiter Schritt umfasst ein Erhalten eines Abbilds eines zweiten Objektbereichs aus einer zweiten Perspektive, das mit einem zweiten Polarisationsfilter aufgenommen ist. Bei dem ersten Schritt und dem zweiten Schritt überlappen sich zumindest teilweise der erste Objektbereich und der zweite Objektebereich. Ein dritter Schritt umfasst ein Aneinanderanpassen der Abbilder, so dass geometrische Verzerrungen zwischen dem Abbild des ersten Objektbereichs und des Abbilds des zweiten Objektbereichs zumindest teilweise kompensiert werden. Ein vierter Schritt umfasst das Ableiten von Polarisationsinformation aus den aneinander angepassten Abbildern. Das beschriebene Ausführungsbeispiel ermöglicht ein kostengünstiges und effizientes Ableiten von Polarisationsinformationen womit einfach mechanische Spannungen in einem Objekt bestimmt werden können.

Bei einem weiteren bevorzugten Ausführungsbeispiel weisen der erste Objektbereich und der zweite Objektbereich eine näherungsweise ebene, oder flächige, Oberfläche auf. Das beschriebene Ausführungsbeispiel ist vorteilhaft, um beispielsweise eine Abschattung von Objektbereichen durch strukturierte Oberflächen zu vermeiden.

Ein bevorzugtes Ausführungsbeispiel gemäß der Erfindung schafft einen Programmcode zur Durchführung der beschriebenen Verfahren, wenn das Programm auf einem Computer abläuft. Das beschrieben Ausführungsbeispiel ist vorteilhaft, um beispielsweise mittels vorhandener Computer, Kameras und Polarisationsfilter mechanische Spannungen in einem Objekt zu ermitteln.

Ein weiteres Ausführungsbeispiel gemäß der Erfindung betrifft ein Verfahren und eine Vorrichtung zur bildhaften Spannungsmessung an transparenten Objekten.

Die Verfahren können um alle Merkmale und Funktionalitäten, die hierhin in Bezug auf die erfindungsgemäßen Vorrichtungen beschrieben sind, erweitert werden.

### Figurenkurzbeschreibung

Ausführungsbeispiele gemäß der vorliegenden Erfindung werden nachfolgend Bezug nehmend auf die beiliegenden Figuren näher erläutert. Es zeigen:
- Fig. 1: eine schematische Darstellung einer Messanordnung gemäß einem Ausführungsbeispiel der vorliegenden Erfindung;
- Fig. 2: eine schematische Darstellung einer Messanordnung gemäß einem Ausführungsbeispiel der vorliegenden Erfindung;
- Fig. 3: eine schematische Darstellung einer Kameraanordnung gemäß einem Ausführungsbeispiel der vorliegenden Erfindung;
- Fig. 4: eine schematische Darstellung einer Kameraanordnung gemäß einem Ausführungsbeispiel der vorliegenden Erfindung;
- Fig. 5: eine schematische Darstellung einer Kameraanordnung gemäß einem Ausführungsbeispiel der vorliegenden Erfindung;
- Fig. 6: ein Flussdiagramm eines Verfahrens gemäß einem Ausführungsbeispiel der vorliegenden Erfindung.

### Detaillierte Beschreibung der Ausführungsbeispiele

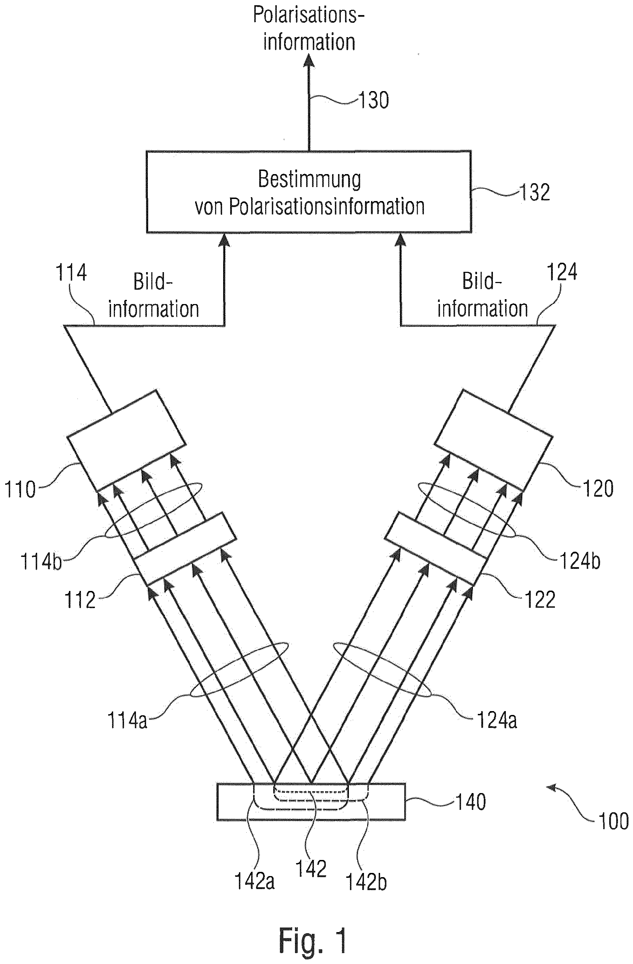

### 1. Ausführungsbeispiel gemäß Fig. 1

Fig. 1 zeigte eine schematische Darstellung einer Messanordnung, gemäß einem Ausführungsbeispiel der vorliegenden Erfindung.

Die Messanordnung 100 umfasst eine erste Kamera 110, eine zweite Kamera 120, einen ersten Polarisationsfilter 112 und einen zweiten Polarisationsfilter 122. Des Weiteren ist die Messanordnung 100 ausgelegt, um basierend auf einer ersten Bildinformation 114, bereitgestellt von der ersten Kamera 110, und einer zweiten Bildinformation 124, bereitgestellt von der zweiten Kamera 120, eine Polarisationsinformation 130 zu bestimmen (beispielsweise durch die Vorrichtung 132). Hierzu nehmen die erste Kamera 110 und die zweite Kamera 120 ein Abbild eines ersten Objektbereichs 142a und eines zweiten Objektbereichs 142b eines Objekts 140 auf. In Fig. 1 sind der erste Objektbereich 142a und der zweite Objektbereich 142b überlappend dargestellt, und deren Überlapp ist gekennzeichnet mit 142. Des Weiteren ist ein erster Strahlengang 114a und 114b zwischen dem ersten Objektbereich 142a und der ersten Kamera 110 eingezeichnet. Der Strahlengang 114a und 114b passiert auf dem Weg von dem ersten Objektbereich 142a zur Kamera 110 den Polarisationsfilter 112. Weiterhin ist ein zweiter Strahlengang 124a und 124b eingezeichnet, der von dem zweiten Objektbereich 142b zur zweiten Kamera 120 führt. Der zweite Strahlengang 124a und 124b passiert auf dem Weg von dem zweiten Objektbereich 142b zur Kamera 120 den zweiten Polarisationsfilter 122, der eine andere Polarisationsrichtung als der Polarisationsfilter 112 aufweist. Die Bildinformationen 114 und 124 sind charakterisiert durch die Objektbereiche 142a und 142b, die Polarisationsfilter 112 und 122 sowie die Perspektiven der Kameras 110 und 120. Durch einen geringen Winkel zwischen den Strahlengängen 114a, b und 124a, b weisen die Bildinformationen nur geringe geometrische Verzerrungen (beispielsweise relativ zueinander) auf. In anderen Worten, die erhaltenen Bildinformationen 114 und 124 können in manchen Fällen ohne weitere komplexe Nachbearbeitung zur Bestimmung von Polarisationsinformationen 132 dienen. In anderen Fällen kann eine Anpassung der Bildinformation 114, 124 aneinander erfolgen.

Die Messanordnung 100 kann optional um einige oder alle der im Folgenden noch beschriebenen strukturale Merkmale bzw. Funktionalitäten erweitert werden.

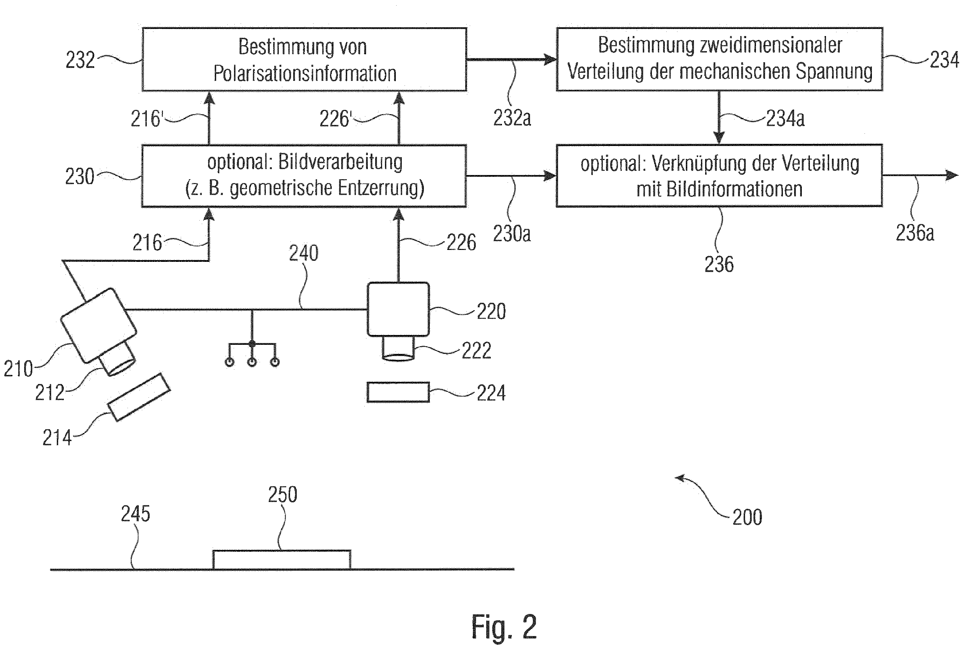

### 2. Ausführungsbeispiel gemäß Fig. 2

Fig. 2 zeigt eine schematische Darstellung einer Messanordnung gemäß einem Ausführungsbeispiel der vorliegenden Erfindung.

Die Messanordnung 200 umfasst eine erste Kamera 210, die mit einem ersten Objektiv 212 ausgestattet ist, und eine zweite Kamera 220, die mit einem zweiten Objektiv 222, das sich vom ersten Objektiv 212 unterscheidet (also beispielsweise separat von dem ersten Objektiv ist), ausgestattet ist. Beispielsweise kann das erste Objektiv und das zweite Objektiv gleichartig sein. Weiterhin weist die Messanordnung 200 einen ersten Polarisationsfilter 214 auf, der in einem Strahlengang der ersten Kamera 210 angeordnet ist. Des Weiteren weist die Messanordnung 200 einen zweiten Polarisationsfilter 224 auf, der sich von dem ersten Polarisationsfilter 214 unterscheidet, und in einem Strahlengang der zweiten Kamera 220 angeordnet ist. Hinzukommend weist die Messanordnung 200 eine Kamerahalterung 240 auf, auf der die Kameras 210 und 220 angeordnet sind. Zusätzlich weist die Messanordnung 200 einen Objektträger 245 auf, auf dem ein Objekt 250 angeordnet ist, beziehungsweise angeordnet oder befördert werden kann, so dass sich die abgebildeten Objektbereiche der Kameras 210 und 220 zumindest teilweise überlappen. Die Kameras 210 und 220 liefern jeweils ein Abbild des Objekts 250 aus einer ersten Perspektive und aus einer zweiten Perspektive, wobei sich die Perspektiven unterscheiden können. Die erste Bildinformation 216 aus der ersten Kamera 210 und die zweite Bildinformation 226 aus der zweiten Kamera 220 werden mittels Bildverarbeitung 230 (zum Beispiel durch geometrische Entzerrung und/oder Verschiebung) aneinander angeglichen. Hierbei kann eine der beiden Bildinformationen 216 oder 226 als Referenz dienen und die andere Bildinformation 216 oder 226 daran angeglichen werden, so dass Beispielsweise geometrische Projektionseigenschaften kompensiert werden. Basierend auf den aneinander angeglichenen Bildinformationen 216' und 226' findet eine Bestimmung der Polarisationsinformation in Block 232 statt. Mittels der erhaltenen Polarisationsinformation 232a wird in Block 234 eine zweidimensionale Verteilung der mechanischen Spannung bestimmt. Die erhaltene Verteilung der mechanischen Spannungen 234a wird (optional) zusammen mit einer Bildinformation 230a verknüpft 236, womit eine bildhafte Darstellung der Verteilung der mechanischen Spannung erzeugt wird 236a.

Die beschriebene Anordnung kann beispielsweise vorteilhaft dazu dienen, um mittels der bildhaften Darstellung der Verteilung der mechanischen Spannung 236a eine einfach Lokalisation von mechanischen Spannungen in dem Objekt 250 zu ermöglichen. Insbesondere ist die Anordnung vorteilhaft, da neben den Objektiven 212 und 222 und den Polarisationsfiltern 214 und 224 keine weiteren optischen Mittel nötig sind. Hinzukommend kann, beispielsweise ermöglicht durch die gleichzeitig geschehende Erfassung der Bildinformationen 216 und 226, eine mögliche Bewegung des Objekts 250 bei einer Messung der mechanischen Spannung toleriert werden.

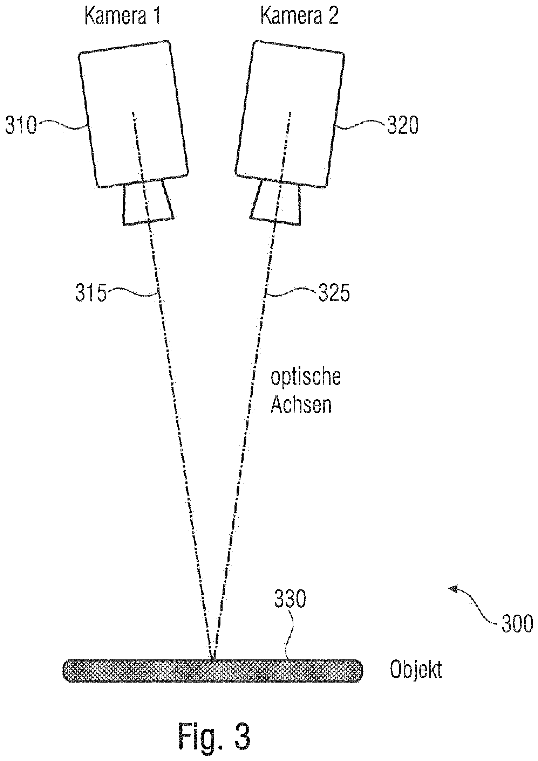

### 3. Kameraanordnung gemäß Fig. 3

Fig. 3 zeigt eine schematische Anordnung von Kameras, gemäß einem Ausführungsbeispiel der vorliegenden Erfindung.

Fig. 3 zeigt eine Anordnung 300 am Beispiel für zwei Kameras. Die Anordnung 300 zeigt eine erste Kamera 310 (die beispielsweise an die Stelle der Kamera 110 oder der Kamera 210 treten kann) und eine zweite Kamera 320 (die beispielsweise an die Stelle der Kamera 120 oder der Kamera 220 treten kann), deren optischen Achsen 315 und 325 miteinander einen geringen Winkel beschreiben. Die beiden Kameras 310 und 320 sind auf ein Objekt 330 gerichtet, das beispielsweise dem Objekt 140 beziehungsweise dem Objekt 250 entsprechen kann.

Hierbei sind die Kameras, 310 und 320, oberhalb einer Ebene angeordnet auf dem das Objekt 330 angeordnet ist. Die Kameras 310 und 320 weisen einen identischen Abstand zu dem Objekt 330 auf. Die Kameras 310 und 320 sind symmetrisch zu einer Ebene angeordnet, die senkrecht auf der Ebene steht, auf dem das Objekt angeordnet ist. Die optischen Achsen, 315 und 325, der Kameras sind auf die Ebene auf der das Objekt angeordnet ist, ausgerichtet. Die optischen Achsen, 315 und 325, schneiden sich unter einem geringen Winkel benachbart zu der Ebene auf der das Objekt angeordnet ist oder in dem Objekt 330.

Die beschriebene Anordnung 300 ist vorteilhaft, da durch den geringen Winkel unter dem sich die optischen Achsen schneiden eine komplexe Nachbearbeitung der Bildinformation (wie zum Beispiel im Block 230) wegfallen kann, womit eine einfache Gewinnung der Polarisationsinformation ermöglicht wird, die zur Bestimmung von mechanischen Spannungen in dem Objekt 330 genutzt werden kann.

Die Kameraanordnung 300 ist insbesondere vorteilhaft, da durch die Ähnlichkeit der verwendeten Perspektiven der Kameras 310 und 320 eine geometrische Verzerrung auf ein Mindestmaß reduziert wird. Durch die geringfügige geometrische Verzerrung ist eine direkte Vergleichbarkeit der erhaltenen Bildinformationen gegeben, womit ebenfalls direkt eine Polarisationsinformation ermittelt werden kann. Mit der somit erhaltenen Polarisationsinformation können infolgedessen einfach die mechanischen Spannungen im Objekt 330 bestimmt werden.

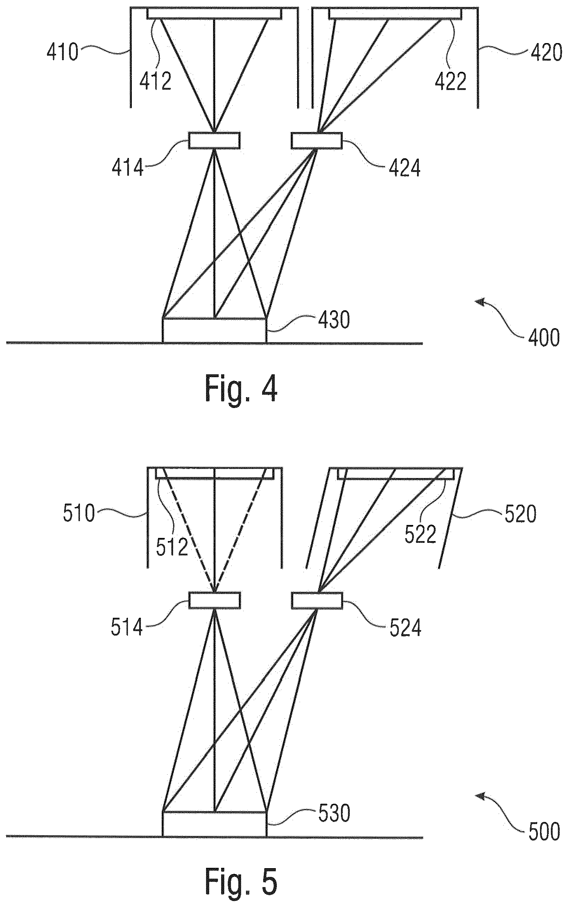

### 4. Kameraanordnung gemäß Fig. 4

Die Anordnung 400 weist eine erste Kamera 410 und eine zweite Kamera 420 auf. Die erste Kamera 410 weist einen ihr zugeordneten Bildsensor 412 und die zweite Kamera 420 weist einen ihr zugeordneten Bildsensor 422 auf. Weiterhin weist die erste Kamera 410 eine ihr zugeordnete optische Linse auf 414 (die Teil eines Objektivs sein kann) und die zweite Kamera eine ihr zugeordnete optische Linse 424 (die Teil eines Objektivs sein kann) auf.

Die Kameras 410 und 420 sind benachbart angeordnet und ihre jeweiligen Bildsensoren befinden sich in einer gemeinsamen Ebene. Ihre optischen Achsen sind auf ein Objekt 430, das beabstandet von den Kameras 410 und 420 angeordnet ist, ausgerichtet.

Eine Linse 414 (oder ein Objektiv) der ersten Kamera 410 ist derart angeordnet, dass dessen optische Achse durch eine Mitte des Bildsensors 412 der ersten Kamera 410 verläuft. Die erste Kamera 410 ist derart angeordnet, dass deren optische Achse im Wesentlichen (zum Beispiel mit einer Toleranz von +/-5 Grad) senkrecht zu einer Objektebene steht, bzw. dass ein Bildsensor 412 der ersten Kamera im Wesentlichen parallel zu der Objektebene ist.

Eine Linse 424 der zweiten Kamera 420 liegt beispielsweise in einer gemeinsamen Ebene mit der Linse 414 der ersten Kamera 410 und ist im Hinblick auf den Bildsensor 422 der zweiten Kamera 420 versetzt angeordnet, wobei beispielsweise eine optische Achse der Linse 424 der zweiten Kamera 420 gegenüber einem Mittelpunkt des Bildsensors 422 der zweiten Kamera (beispielsweise deutlich) versetzt ist. Die zweite Kamera 420 ist beispielsweise derart angeordnet, dass eine Achse, die durch einen Mittelpunkt des Bildsensors 422 der zweiten Kamera und einen Mittelpunkt der Linse 424 der zweiten Kamera 420 verläuft, die Objektebene unter einem anderen Winkel schneidet als die optische Achse der ersten Kamera 410. Der Bildsensor 422 der zweiten Kamera 420 ist, ebenso wie der Bildsensor 412 der ersten Kamera, im Wesentlichen parallel zu der Objektebene.

Die erste Kamera 410 und die zweite Kamera 420 sind derart angeordnet, dass die erste Kamera 410 ein Abbild eines ersten Objektbereichs und die zweite Kamera 420 einen Abbild des zweiten Objektbereichs erfassen, wobei sich die Bildfelder der Kameras zumindest teilweise überlappen so dass sich der von der ersten Kamera 410 aufgenommene Objektbereich und der von der zweiten Kamera 420 aufgenommene Objektbereich zumindest teilweise überlappen.

Bei einem Ausführungsbeispiel kann eine optische Achse von einer der Linsen, gegenüber einer Mitte einer Bildfläche des jeweiligen Bildsensors seitlich versetzt sein, wobei ein Winkel zwischen der Bildfläche und der optischen Achse zwischen 88° und 90° liegt. Alternativ können auch beide Kameras Linsen aufweisen, deren optische Achsen im Bezug auf die jeweiligen Bildsensoren versetzt sind.

Durch die beschriebene Anordnung können ähnliche Objektbereiche eines Objekts 430 von beiden Kameras 410 und 420 erfasst werden, obwohl die Gehäuse beider Kameras 410 und 420 parallel ausgerichtet sind.

Hinzukommend sind die abgebildeten Objektbereiche hinreichend ähnlich, d.h. beispielsweise mit geringen geometrischen Verzerrungen, so dass ein direkter Vergleich möglich ist. Mittels des direkten Vergleichs kann wiederum vereinfacht eine Polarisationsinformation erhalten werden. Anhand der erhaltenen Polarisationsinformation kann eine Bestimmung der mechanischen Spannung erfolgen.

Die beschrieben Kameraanordnung 400 ist besonders vorteilhaft, da geringe geometrische Verzerrungen zwischen den Abbildungen erzielt werden kann und somit eine komplexe Nachbearbeitung nicht notwendig sein kann.

### 5. Kameraanordnung gemäß Fig. 5

Fig. 5 zeigt eine schematische Darstellung einer Kameraanordnung, gemäß einem Ausführungsbeispiel der vorliegenden Erfindung.

Die Kameraanordnung 500 beschreibt geometrisch eine analoge Anordnung zur Kameraanordnung 400. Die Kameraanordnung 500 weist eine erste Kamera 510 und eine zweite Kamera 520 sowie dazugehörige Bildsensoren 512 und 522 auf. Weiterhin weist die Kameraanordnung 500 eine zu der ersten Kamera 510 zugeordnete Linse 514 und eine zu der zweiten Kamera 520 zugeordnete Linse 524 auf. Die erste Linse 514 ist konzentrisch mit dem Bildsensor 512 der ersten Kamera 510 angeordnet. Die zweite Linse 524 ist versetzt zum Bildsensor 522 der zweiten Kamera 524 angeordnet. Weiterhin weisen die Kameras 510 und 520 unterschiedliche Bauweisen auf, weshalb sie unterschiedliche Gehäuseformen aufweisen. Durch die beschriebene Anordnung 500 können vorteilhaft gemeinsame Bildbereiche festgehalten werden, wobei die erzeugten Abbilder der Kameras 510 und 520 des Objektbereichs des Objekts 530 eine große Ähnlichkeit aufweisen, bzw. geringe geometrische Verzerrungen untereinander aufweisen.

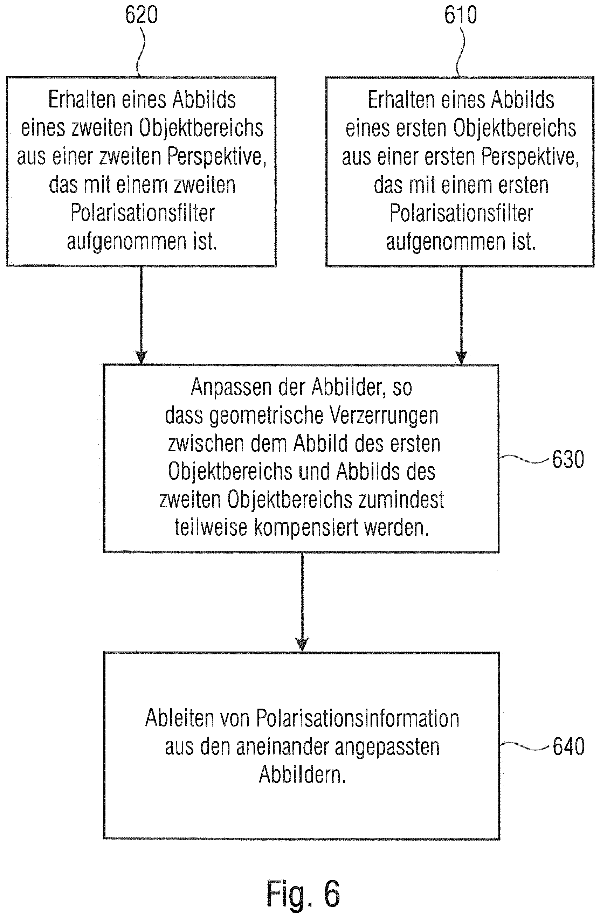

### 6. Blockdiagramm gemäß Fig. 6

Fig. 6 zeigt ein Blockdiagramm eines Verfahrens gemäß einem Ausführungsbeispiel der vorliegenden Erfindung. In den Blöcken 610 und 620 werden im ersten Schritt zwei Abbilder von zwei Objektbereichen erhalten. Dabei ist ein erstes Abbild eines ersten Objektbereichs aus einer ersten Perspektive, mit einem ersten Polarisationsfilter aufgenommen und ein zweites Abbild eines zweiten Objektbereichs, mit einem zweiten Polarisationsfilter aufgenommen. Wobei Die Polarisationsrichtungen des ersten und des zweiten Polarisationsfilters unterschiedlich sind. Daraufhin werden in Block 630 die Abbilder der Objektbereiche aneinander angepasst, so dass geometrische Verzerrungen zwischen dem Abbild des ersten Objektbereichs und Abbilds des zweiten Objektbereichs zumindest teilweise kompensiert werden. Aus den aneinander angepassten Abbildern wird eine Polarisationsinformation in Block 640 abgeleitet. Basierend auf der abgeleiteten Polarisationsinformation können mechanische Spannungen in überlappenden Objektbereichen bestimmt werden.

### Weitere Aspekte und Schlussfolgerungen

Im Folgenden werden einige Überlegungen und Erkenntnisse dargestellt, die bei der Entwicklung des Erfindungskonzepts berücksichtigt wurden.

Die bildgebende Messung von Restspannungen in Produkten beispielsweise aus Glas und transparenten Kunststoff kann erforderlich sein, um die Qualität der Produkte sicherzustellen. Eine weit verbreitete Methode nutzt polarisiertes Licht, das durch das Prüfobjekt geschickt und mit Hilfe unterschiedlicher Verfahren analysiert wird. Einige Ausführungsbeispiele gemäß der Erfindung nutzen handelsübliche Kameras in einer speziellen geometrischen Anordnung. Die Kameras sind mit Polarisationsfiltern versehen und fertigen Bilder von einem bestimmten Objekt aus ähnlichen, aber dennoch leicht verschiedenen Blickrichtungen an, beispielsweise leicht verschiedene Perspektiven. Die geometrischen Verzerrungen aufgrund der unterschiedlichen Blickrichtungen können (beispielsweise sofern erforderlich) optisch und/oder mittels digitaler Bildverarbeitung korrigiert (entzerrt) werden, so dass sich die korrigierten Einzelbilder passgenau zu einem vollständigen Polarisationsbild zusammenfügen lassen. Die dabei entstehenden Fehler sind beispielsweise hinreichend klein für die technische Anwendung.

Bei einem Ausführungsbeispiel werden zwei oder mehr herkömmliche Kameras unmittelbar nebeneinander montiert, so dass sich die Bildfelder überlappen. Damit "sieht" jede Kamera ungefähr den gleichen Objektbereich, jedoch unter einem leicht unterschiedlichen Blickwinkel (also aus unterschiedlicher Perspektive). Die Bildaufnahme der Kameras ist beispielsweise synchronisiert.

Vor jeder Kamera ist jeweils ein Polarisationsfilter angebracht. Diese Polarisationsfilter sind relativ zueinander verdreht, z.B. ist die Differenz 45 Grad oder 90 Grad. Jeder andere Winkel ist denkbar. Somit nimmt jede Kamera ein Bild des gleichen Objekts, jedoch mit unterschiedlicher Polarisationsrichtung auf. Aus der Polarisationsinformation der synchronen Einzelbilder (oder aus der Helligkeitsinformation) kann nun die gesamte Polarisationsinformation in einem digital mit Bildverarbeitung zusammengesetzten "fusionierten" Bild errechnet werden. Dabei gibt es allgemein ein geometrisches Problem: Aufgrund der unterschiedlichen Blickrichtung (beziehungsweise Perspektive) der Kameras entsteht bei der Abbildung vom Objektbereich in den Bildbereich eine geometrische Verzerrung: Die Bilder passen nicht zusammen.

Es wurde erkannt, dass dieses vermeintliche Problem einer technisch sinnvollen Lösung nicht im Wege steht. Wenn nämlich die Kameras in einem relativ großen Abstand vom Objekt montiert sind, ist sind die Blickrichtungen ungefähr parallel. Wenn zusätzlich das Objekt flach/ebenen ist, z.B. eine Glasplatte, äußert sich der unterschiedliche Blickwinkel nur durch eine relativ geringe und deterministische Verzerrung (Trapez). Es wurde erkannt, dass diese Verzerrung entweder für eine bestimmte Messaufgabe nicht störend ist, oder sie kann auf zweierlei Weise reduziert beziehungsweise korrigiert werden:
- Durch geeignete Verschiebung des Objektivs senkrecht zur optischen Achse. Dies ist eine rein optische Maßnahme und führt dazu, dass die Objektebene praktisch verzerrungsfrei in die Bildebene projiziert wird. Dies gilt für alle Kameras, so dass jede Kamera ein Bild liefert, welches mit hinreichender Genauigkeit geometrisch zu den Bildern der anderen Kameras passt.
- Durch digitale Bildverarbeitung in einem Computer (oder in einer Hardware). Hier werden die unterschiedlich verzerrten Bilder der Kameras geometrisch korrigiert, so dass sie sich hinreichend fehlerfrei zu einem Gesamtbild kombinieren (beziehungsweise kombinierend verarbeiten) lassen.

Für das Gesamtsystem können folgende Komponenten genutzt werden:
- Zwei oder mehrere Kameras mit Objektiv und Polarisationsfilter
- Befestigung für die Montage der Kameras
- Software/PC (Personal Computer) zur digitalen Korrektur der Einzelbilder

Im Folgenden werden weitere Ausführungsbeispiele beziehungsweise Merkmale oder Aspekte, die zu den hierhin beschriebenen Ausführungsbeispielen einzeln oder in Kombination hinzugefügt werden können, beschrieben.

Eine Erkenntnis gemäß der Erfindung ist, dass für eine genaue Messung der lokalen Verteilung der Spannungen im Objekt ein bildgebendes Verfahren vorteilhaft ist. Daher betrifft ein weiterer Aspekt gemäß der Erfindung eine bildhafte Messung der Polarisation, um daraus die zweidimensionale Verteilung von Spannungen zu ermitteln.

Mit den beschriebenen Ausführungsbeispielen lassen sich einfachere und kostengünstigere Aufbauten für Messanordnungen realisieren. Des Weiteren sind beispielsweise kostengünstige Standard-Polarisationsfilter und Standardkameras, beispielsweise Standard-Endverbraucher Kamers oder Standard-Industriekameras, verwendbar. Weiterhin bieten einige Ausführungsbeispiele eine hohe Genauigkeit trotz Störeinflüssen, wie Änderung einer Helligkeit, beispielsweise einer Lampenhelligkeit, und/oder einer Transmission des Materials (abhängig zum Beispiel von : Farbe, Dicke, Schmutz).

Ein weiterer Vorteil der beschriebene Ausführungsbeispiel betrifft den Aspekt, dass keine mechanisch bewegten Teile nötig sind, welche beispielsweise wartungsintensiv sein können. Hinzukommend bieten die beschriebenen Ausführungsbeispiele eine Möglichkeit der bildhaften Messung von mechanischen Spannungen.

Ein weiterer Aspekt gemäß der Erfindung betrifft ein System/Verfahren, das zu einem bestimmten Zeitpunkt ein vollständiges Polarisationsbild eines Objekts liefert. Eine Bewegung des Objekts stört nicht, da die Bilder der verschiedenen Kameras jeweils gleichzeitig aufgenommen werden.

Daraus ergeben sich bei einigen Ausführungsbeispielen einige oder alle der folgenden Vorteile:
- es kann ein Polarisationsbild unter Verwendung von marktüblichen Kameras generiert werden. Dies ist kostengünstig und man ist frei in der Wahl der Kamera, die hinsichtlich ihrer technischen Eigenschaften für jeden Anwendungsfall passend ausgewählt werden kann.
- es sind keinerlei spezielle optische Einrichtungen (beispielsweise Strahlteiler, drehbare Filter, etc.) notwendig.
- Es werden keine speziellen Kameras mit integrierten Polarisationsfiltern in der Kamera, beziehungsweise vor oder in dem Bildsensor benötigt (beispielsweise Polarisationsbildsensor).
- Bewegte Objekte verursachen keine Fehler
- Schwankungen in der Helligkeit der verwendeten Lichtquellen verursachen keinen Fehler
- Änderung der Transmission des Objekts aufgrund von Schmutz, Einfärbung, Dickenvariation oder Lichtbrechung durch gewölbte Oberflächen verursacht keinen Fehler.

Hierbei können die Bilder, bei hohen Anforderungen an die Bildqualität (Auflösung, Passgenauigkeit), mit Mitteln der digitalen Bildverarbeitung (Software) geometrisch korrigiert werden.

Wenn die Anforderung an die Passgenauigkeit der Einzelbilder eher niedrig ist, kann man ohne digitale Korrektur und ohne eine vom Zentrum des Bildsensors versetzt angeordnete Linse oder ein Objektiv auskommen. Die Bilder können so einfach nur zusammengerechnet werden (um beispielweise von geometrisch nicht korrigierten Bildern die Polarisationsinformation abzuleiten).

Ein weiteres Ausführungsbeispiel gemäß der Erfindung betrifft eine Anordnung, bei der mehrere Kameras mit ungefähr parallelen optischen Achsen unmittelbar nebeneinander montiert sind. Die Kameras sind mit Polarisationsfiltern bestückt, die unterschiedlich orientiert sind. Die Einzelbilder werden von einer Software korrigiert und (optional) zusammengesetzt, woraus ein Ergebnisbild bereitgestellt wird.

Die beschriebenen Ausführungsbeispiele gemäß der Erfindung können allgemein beispielsweise Anwendung in industrieller bildbasierter Mess- und Prüftechnik, die auf der Anwendung von polarisiertem Licht basiert, finden. Ausführungsbeispiele der Erfindung können beispielsweise bei einer bildhaften Messung der mechanischen Spannungen in flachem Glas oder Kunststoffplatten oder Kunststofffolien Anwendung finden.

Weitere konkrete Beispiele für Anwendungsgebiete für Ausführungsbeispiele gemäß der Erfindung sind:
- Industrielle Prüfung von Glasprodukten (Flachglas, Flaschen, Trinkgläsern usw.). Bei fehlerhafter Abkühlung verbleibt eine Restspannung, die zum Bruch des Bauteils führen kann. Bei der Flachglasproduktion führen Eigenspannungen zu schlechten Ergebnissen beim Schnitt (Schnittbruch). Durch optimierte Regelung des Abkühlofens (beispielsweise basierend auf der Polarisationsinformation) kann Energie gespart und Fertigungsausschuss reduziert werden.
- Prüfung von Glasprodukten, so dass eine Restspannung vorhanden bleibt bei einer Fertigung um ein beispielsweise besonders widerstandsfähiges Produkt zu erhalten.
- Prüfung von Kunststofffolien hinsichtlich mechanischer Spannungen und Homogenität.
- Prüfung der Faserorientierung bei CFK (carbonfaserverstärkter Kunststoff-Produkten während und nach der Herstellung. Die korrekte Ausrichtung der Fasern in einem faserverstärkten Bauteil ist für die Festigkeit ausschlaggebend.
- Materialsortiertung (Müll, Rohstoffe oder Kontrolle nach einer Fertigung, z.B. Lebensmittel): Unterschiedliche Materialien können mit polarisiertem Licht gut unterschieden werden.
- Untersuchung nichtmetallischer Schichten auf metallischen sowie nichtmetallischen Substraten.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Des-halb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutz-umfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Messanordnung (100; 200) zum Messen von mechanischen Spannungen in einem Objekt (140; 250; 330; 430; 530),
wobei die Messanordnung eine erste Kamera (110; 210; 310; 410; 510) aufweist, die ausgelegt ist, um unter Verwendung eines ersten Polarisationsfilters (112; 214) ein Abbild eines ersten Objektbereichs (142a) des Objekts aus einer ersten Perspektive zu erzeugen;
wobei die Messanordnung eine zweite Kamera (120; 220; 320; 420; 520) aufweist, die ausgelegt ist, um unter Verwendung eines zweiten Polarisationsfilters (122; 224), dessen Polarisationsrichtung sich von einer Polarisationsrichtung des ersten Polarisationsfilters unterscheidet, ein Abbild eines zweiten Objektbereichs (142b) des Objekts aus einer zweiten Perspektive zu erzeugen;
wobei sich Bildfelder der ersten Kamera und der zweiten Kamera zumindest teilweise überlappen, so dass sich der von der ersten Kamera erfasste erste Objektbereich und der von der zweiten Kamera erfasste zweite Objektbereich zumindest teilweise überlappen (142);
wobei die Messanordnung ausgelegt ist, um basierend auf einer von der ersten Kamera gelieferten Bildinformation (114;216) und einer von der zweiten Kamera gelieferten Bildinformation (124; 226) eine Polarisationsinformation (130; 232a) zu erhalten.

2. Messanordnung gemäß Anspruch 1, wobei die erste Kamera ausgelegt ist, um das Abbild des ersten Objektbereichs des Objekts direkt aufzunehmen, und
wobei die zweite Kamera ausgelegt ist, um das Abbild des zweiten Objektbereichs des Objekts direkt aufzunehmen.

3. Messanordnung gemäß einem der Ansprüche 1 bis 3, wobei die Messanordnung derart ausgelegt ist, dass von einem vorgegebenen Punkt des Objekts, der in dem ersten Objektbereich und in dem zweiten Objektbereich liegt, ein erster Strahlengang (114a,b) zu der ersten Kamera ausgeht, und dass von dem vorgegebenen Punkt des Objekts ein zweiter Strahlengang (124a,b) zu der zweiten Kamera ausgeht, wobei der erste Strahlengang und der zweite Strahlengang sich zumindest in einem Bereich in der Umgebung des Objekts unterscheiden.

4. Messanordnung gemäß einem der Ansprüche 1 bis 3, wobei die erste Kamera ein der ersten Kamera zugeordnetes Objektiv (212) aufweist, wobei ein direkter geradliniger Strahlengang zwischen dem der ersten Kamera zugeordneten Objektiv und dem ersten Objektbereich besteht; und
wobei die zweite Kamera ein der zweiten Kamera zugeordnetes Objektiv (222) aufweist, wobei ein direkter geradliniger Strahlengang zwischen dem der zweiten Kamera zugeordneten Objektiv und dem zweiten Objektbereich besteht; und
wobei das der ersten Kamera zugeordnete Objektiv sich von dem der zweiten Kamera zugeordneten Objektiv unterscheidet.

5. Messanordnung gemäß einem der Ansprüche 1 bis 4, wobei die erste Kamera und die zweite Kamera angeordnet sind, um die Abbilder des ersten Objektbereichs und des zweiten Objektbereichs über vollständig getrennte Strahlengänge aufzunehmen.

6. Messanordnung gemäß einem der Ansprüche 1 bis 5, wobei die erste Kamera und die zweite Kamera angeordnet sind, um die Abbilder des ersten Objektbereichs und des zweiten Objektbereichs ohne Verwendung eines gemeinsamen optischen Systems aufzunehmen.

7. Messanordnung gemäß einem der Ansprüche 1 bis 6, wobei die Messanordnung ausgelegt ist, um eine Polarisationsinformation basierend auf Helligkeitsverhältnissen der sich überlappenden Abbilder des ersten Objektbereichs und des zweiten Objektbereichs der Bildfelder der ersten Kamera und der zweiten Kamera zu erzeugen.

8. Messanordnung gemäß einem der Ansprüche 1 bis 7, wobei die Messanordnung einen Objektträger (245) aufweist, der ausgelegt ist um das Objekt so zu positionieren, dass zumindest eine Oberfläche des Objekts in einem Bereich, im dem sich die Bildfelder der ersten Kamera und der zweiten Kamera überlappen, angeordnet ist, und wobei die Messanordnung eine Kamerahaltevorrichtung (240) aufweist, die ausgelegt ist, um die Kameras zu tragen.

9. Messanordnung gemäß einem der Ansprüche 1 bis 8, wobei die Messanordnung ausgelegt ist, um basierend auf der Polarisationsinformation eine zweidimensionale oder dreidimensional Verteilung von mechanischen Spannungen in dem Objekt zu ermitteln.

10. Messanordnung gemäß Anspruch 9, wobei die Messanordnung ausgelegt ist, um eine Information über die zweidimensionale Verteilung von mechanischen Spannungen mit einem Abbild eines Objektbereichs zu verknüpfen,
wobei die Messanordnung ausgelegt ist, um das Abbild des Objektbereichs basierend auf der von der ersten Kamera gelieferten Bildinformation und auf der von der zweiten Kamera gelieferten Bildinformation zu erzeugen.

11. Messanordnung gemäß einem der Ansprüche 1 bis 10, wobei die erste Kamera und die zweite Kamera derart angeordnet sind, so dass Normalenebenen, die senkrecht zu der optischen Achse der ersten Kamera und der zweiten Kamera sind, sich in einem Winkel zwischen 0,1° und 30° schneiden.

12. Messanordnung gemäß einem der Ansprüche 1 bis 11, wobei die Messanordnung ausgelegt ist, um überlappende Abbilder des ersten Objektbereichs der ersten Kamera und des zweiten Objektbereichs der zweiten Kamera unter Verwendung einer Bildverarbeitung (230) zumindest teilweise geometrisch aneinander anzugleichen, und
wobei die Messanordnung ausgelegt ist, um die Polarisationsinformation von den aneinander angeglichenen Abbildungen (216',226') abzuleiten.

13. Messanordnung gemäß einem der Ansprüche 1 bis 12, wobei die erste Kamera und die zweite Kamera derart angeordnet sind, dass Ebenen, in denen Bildsensoren der ersten Kamera und der zweiten Kamera parallel sind oder einen Winkel von höchstens 2° einschließen, und
wobei zumindest die erste Kamera eine im Hinblick auf einen Bildsensor (422) versetzte Linse (424) aufweist, wobei eine optische Achse der Linse oder eines Objektivs, gegenüber einer Mitte einer Bildfläche des Bildsensors seitlich versetzt ist, wobei ein Winkel zwischen der Bildfläche und der optischen Achse zwischen 88° und 90° liegt, wobei die erste Kamera ausgelegt ist, um einen ersten Objektbereich zu erfassen, so dass sich eine Überlappung von zumindest 80%, oder zumindest 90%, oder zumindest 95%, mit dem zweiten Objektbereich ergibt.

14. Messanordnung gemäß einem der Ansprüche 1 bis 13, wobei die Messanordnung ausgelegt ist, um das Abbild eines ersten Objektbereichs unter Verwendung der ersten Kamera und das Abbild eines zweiten Objektbereichs unter Verwendung der zweiten Kamera, gleichzeitig oder zumindest in kurzem zeitlichen Abstand zu erzeugen.

15. Messanordnung gemäß einem der Ansprüche 1 bis 14, wobei die Messanordnung ausgelegt ist, um eine Messung von mechanischen Spannungen an einem sich bewegenden Objekt durchzuführen.

16. Messanordnung gemäß einem der Ansprüche 1 bis 15, wobei die Messanordnung ausgelegt ist, um eine räumliche oder zeitliche Veränderung einer Helligkeit durch Ausnutzung von zwei Abbildern des überlappenden Objektbereichs zu kompensieren.

17. Verfahren zum Messen von mechanischen Spannungen in einem Objekt, mit folgenden Schritten:
Erzeugen eines Abbilds eines ersten Objektbereichs aus einer ersten Perspektive mit einer ersten Kamera unter Verwendung eines ersten Polarisationsfilters;
Erzeugen eines Abbilds eines zweiten Objektbereichs aus einer zweiten Perspektive mit einer zweiten Kamera unter Verwendung eines zweiten Polarisationsfilters, dessen Polarisationsrichtung sich von einer Polarisationsrichtung des ersten Polarisationsfilters unterscheidet,
wobei sich Bildfelder der ersten Kamera und der zweiten Kamera zumindest teilweise überlappen, so dass sich der von der ersten Kamera erfasste erste Objektbereich und der von der zweiten Kamera erfasste zweite Objektbereich zumindest teilweise überlappen;
Erhalten einer Polarisationsinformation, basierend auf einer von der ersten Kamera gelieferten Bildinformation und einer von der zweiten Kamera gelieferten Bildinformation.

18. Verfahren zum Extrahieren einer mechanischen Spannungsinformation , mit folgenden Schritten:
Erhalten eines Abbilds eines ersten Objektbereichs aus einer ersten Perspektive, das mit einem ersten Polarisationsfilter aufgenommen ist,
Erhalten eines Abbilds eines zweiten Objektbereichs aus einer zweiten Perspektive, das mit einem zweiten Polarisationsfilter aufgenommen ist,
wobei der erste Objektbereich und der zweite Objektebereich sich zumindest teilweise überlappen,
aneinander Anpassen der Abbilder, so dass geometrische Verzerrungen zwischen dem Abbild des ersten Objektbereichs und des Abbilds des zweiten Objektbereichs zumindest teilweise kompensiert werden, und
Ableiten von Polarisationsinformation aus den aneinander angepassten Abbildern.

19. Verfahren gemäß einem der Ansprüche 17 oder 18, wobei der erste Objektbereich und der zweite Objektbereich eine näherungsweise ebene Oberfläche aufweisen.

20. Computerprogramm mit einem Programmcode zur Durchführung des Verfahrens nach den Ansprüchen 17 bis 19, wenn das Programm auf einem Computer abläuft.
